# EUROPEAN PATENT APPLICATION

(11) **EP 4 582 211 A1**
(43) Date of publication of application: **09.07.2025**
(21) Application number: 24222781.7
(22) Date of filing: 23.12.2024
(51) Int. Cl.: B23K 9/32

(54) **WELDING-TYPE CABLES AND WELDING-TYPE TORCHES HAVING WELDING-TYPE CABLES**

(30) Priority: 27.12.2023 US 202363615021 P; 12.12.2024 US 202418979103
(71) Applicant: Illinois Tool Works Inc., Glenview IL 60025 (US)
(72) Inventor: WELLS, Jeffrey, Glenview 60025 (US)
(74) Representative: HGF

(57) **Abstract**

Disclosed example welding-type cables include: a conductor configured to conduct welding-type current; and an outer jacket around the conductor; wherein a first length of the outer jacket is constructed from a first material, and a second length of the outer jacket is constructed from a second material different than the first material, the second length covering a different portion of the conductor than the first length.

## Description

### RELATED APPLICATIONS

The present application claims the benefit of U.S. Provisional Patent Application Serial No. 63/615,021, filed December 27, 2023, entitled "WELDING-TYPE CABLES AND WELDING-TYPE TORCHES HAVING WELDING-TYPE CABLES." The entirety of U.S. Provisional Patent Application Serial No. 63/615,021 is expressly incorporated herein by reference.

### TECHNICAL FIELD

The present disclosure generally relates to welding-type cables, more particularly, welding-type cables and welding-type torches having welding-type cables.

### BACKGROUND

Welding systems are often used in harsh and/or abrasive environments, such as, for example, factory floors, shipyards, construction sites, etc. Welding cables (and/or hoses) used by the welding systems sometimes suffer wear and tear due to the harsh welding environment. This wear and tear can shorten the useful lifespan of the welding cables. Some welding systems therefore use cable covers (and/or sheaths) to protect the welding cables and/or increase welding cable lifespans.

Limitations and disadvantages of conventional and traditional approaches will become apparent to one of skill in the art, through comparison of such systems with the present disclosure as set forth in the remainder of the present application with reference to the drawings.

### SUMMARY

The present disclosure is directed to increasing the lifespan of welding cable covers, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example welding system, in accordance with aspects of this disclosure.
FIG. 2 illustrates an example welding-type torch having a welding-type cable with a multi-material outer jacket, in accordance with aspects of this disclosure.

The figures are not necessarily to scale. Where appropriate, the same or similar reference numerals are used in the figures to refer to similar or identical elements.

### DETAILED DESCRIPTION

Conventional welding torch cables use outer jackets to protect the interior components, such as conductors, fluid conduits, gas conduits, wire conduits, and the like. However, conventional outer jackets are either excessively heavy or insufficiently durable. Excessive weight and/or stiffness in the outer jacket of a torch cable may cause additional strain on a welding operator when manipulating the welding torch. Conversely, insufficient durability in the outer jacket of the torch cable may lead to premature failure of the torch cable, additional costs incurred by the operator, and/or additional downtime to replace worn torch cables and/or torches at higher frequencies than desired.

Disclosed example welding torches and outer jackets for torch cables use a combination of materials over different lengths of the torch cable. In some examples, a length of the torch cable closest to the operator is a lighter weight and/or more flexible material that provides adequate abrasion resistance with easier handling. A second length of the torch cable farther from the operator, which is generally subject to more wear, is constructed from more durable material. These two (or more) lengths are joined to form an improved outer jacket for a torch cable.

Disclosed example welding-type cables include: a conductor configured to conduct welding-type current; and an outer jacket around the conductor; wherein a first length of the outer jacket is constructed from a first material, and a second length of the outer jacket is constructed from a second material different than the first material, the second length covering a different portion of the conductor than the first length.

Some example welding-type cables further include a welding torch connector configured to couple the conductor to a welding torch, in which the first length of the outer jacket covers a portion of the conductor adjacent the welding torch connector. In some example welding-type cables, the first length of the outer jacket has at least one of a lower density or a higher flexibility than the second length of the outer jacket.

In some example welding-type cables, the first length of the outer jacket includes a synthetic polymer. In some example welding-type cables, the synthetic polymer is a polyethylene polymer or a chlorosulfonated polyethylene synthetic rubber. In some example welding-type cables, the first length of the outer jacket is between 0.5 meter and 2 meters, or between 1 meter and 1.5 meters.

Some example welding-type cables further include a welding cable connector configured to couple the conductor to welding-type equipment, in which the second length of the outer jacket covers a portion of the conductor adjacent the welding cable connector. In some example welding-type cables, the second length of the outer jacket includes leather. In some example welding-type cables, the second length of the outer jacket comprises at least one of a para-aramid, a synthetic leather, a leather alternative, or a rubber having a durometer of at least 50A. In some example welding-type cables, the first length is coupled to the second length via at least one of stitching, sewing, clamping, chemical bonding, or ultrasonic welding.

Disclosed example welding-type torches include: a handle; a torch head coupled to the handle; and a torch cable configured to conduct welding-type current to the torch head, the torch cable including: a conductor configured to conduct welding-type current; and an outer jacket around the conductor; in which a first length of the outer jacket is constructed from a first material, and a second length of the outer jacket is constructed from a second material different than the first material, the second length covering a different portion of the conductor than the first length.

In some example welding-type torches, the torch head is at least one of a wire-fed contact tip assembly, a stick electrode holder, a tungsten electrode assembly, a cutting head, or a gouging head. In some example welding-type torches, the first length of the outer jacket covers a portion of the conductor adjacent the handle.

In some example welding-type torches, the first length of the outer jacket has at least one of a lower density or a higher flexibility than the second length of the outer jacket. In some example welding-type torches, the first length of the outer jacket includes a synthetic polymer. In some example welding-type torches, the first length of the outer jacket is between 0.5 meter and 2 meters.

Some example welding-type torches further include a welding cable connector configured to couple the conductor to welding-type equipment, wherein the second length of the outer jacket covers a portion of the conductor adjacent the welding cable connector. In some example welding-type torches, the second length of the outer jacket includes leather. In some example welding-type torches, the second length of the outer jacket includes at least one of a para-aramid, a synthetic leather, a leather alternative, or a rubber having a durometer of at least 50A. In some example welding-type torches, the first length is coupled to the second length via at least one of stitching, clamping, chemical bonding, or ultrasonic welding.

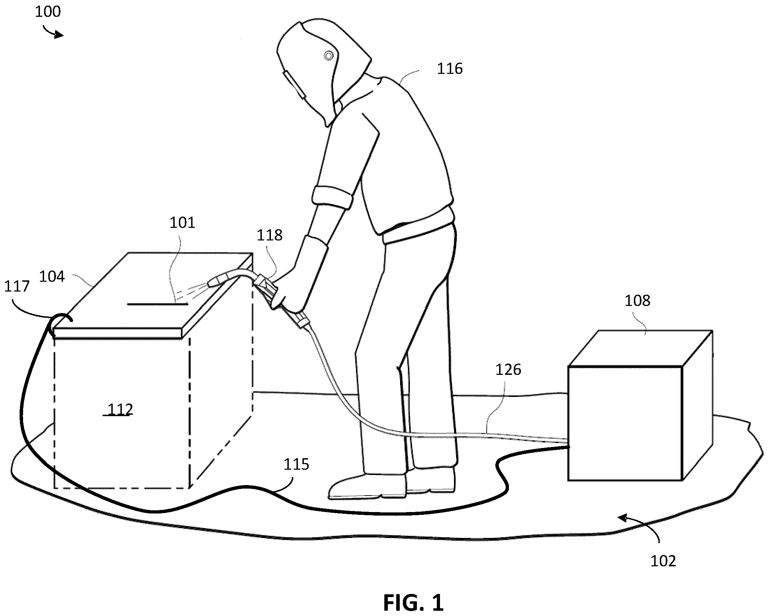

FIG. 1 shows an example welding system 100. As shown, the welding system 100 includes a welding torch 118 and work clamp 117 coupled to a welding-type power supply 108 within a welding cell 102. In the example of FIG. 1, an operator 116 is handling the welding torch 118 near a welding bench 112. While a human operator 116 is shown in FIG. 1, in some examples, the operator 116 may be a robot and/or automated welding machine.

In the example of FIG. 1, the welding torch 118 is coupled to the welding-type power supply 108 via a welding cable 126. A clamp 117 is also coupled to the welding-type power supply 108 via a clamp cable 115. In some examples, the welding-type power supply 108 may control and/or include a gas supply and/or wire feeder. In some examples, the welding-type power supply 108 may be separate from the gas supply and/or wire feeder, and may use one or more gas cables, control cables, power cables, and/or other connecting cables to connect to the gas supply and/or wire feeder. In some examples, welding-type power may be routed though the power cable(s), clamp cable 115, and/or the welding cable 126 (along with gas and/or wire) in order to produce a weld 101 on a workpiece 104.

In some examples, a cable cover may be used to protect the clamp cable 115 and/or welding cable 126 (as well as the power, gas, and/or wire routed therethrough) during welding operations. If left unprotected, the clamp cable 115 and/or welding cable 126 may become worn and/or damaged due to hazards of the welding environment, such as, for example, heat, sparks, spatter, molten material, metals, shavings, particulates, abrasives, equipment, machinery, operators, etc. By covering the welding cable 126 and/or clamp cable 115 to shield against these hazards, the cable cover can increase the usable lifespan of the clamp cable 115 and/or welding cable 126.

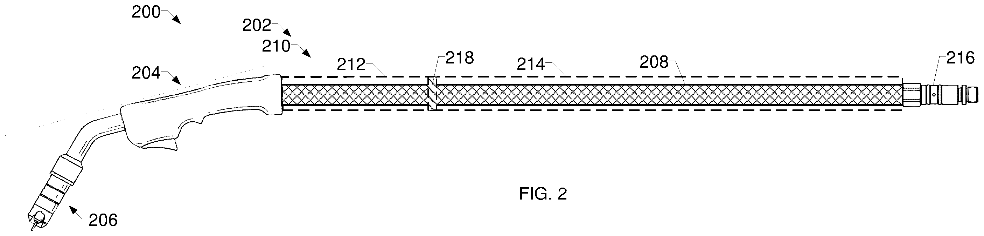

FIG. 2 illustrates an example welding-type torch 200 having a welding-type cable 202 (also referred to as a "torch cable") with a multi-material outer jacket. The example welding-type torch 200 and the welding-type cable 202 may implement the welding torch 118 and the welding cable 126 of FIG. 1.

The welding-type torch 200 includes a torch handle 204 and a torch head 206. The torch handle 204 allows for gripping and manipulation of the torch head 206 by a weld operator. The torch head 206 may implement any desired type of welding-type process. For example, the torch head 206 may be any of a wire-fed contact tip assembly, a stick electrode holder, a tungsten electrode assembly, a cutting head, a gouging head, and/or any other type of welding-type torch.

The torch handle 204 is connected to the welding-type cable 202, which includes a conductor 208 to conduct welding-type current to the torch head 206. In some examples, the conductor 208 terminates at the torch handle 204 (e.g., via a connector), and the torch handle 204 includes internal conductors to conduct the welding-type current to the torch head 206. In other examples, the conductor 208 may be routed at least partially through the torch handle 204 to the torch head 206 for conduction of the welding-type current to the torch head 206.

To reduce or prevent damage to the conductor 208 due to, for example, abrasion or impact in the weld environment, the welding-type cable 202 further includes an outer jacket 210. The outer jacket 210 covers the length of the conductor 208.

In the example of FIG. 2, the outer jacket 210 includes at least two different materials for different length sections of the conductor 208. A first length 212 of the outer jacket 210 is closer to the torch handle 204 (e.g., covers a portion of the conductor adjacent the handle 204), and more heavily influences the weight and flexibility of the welding-type cable 202 that is perceived by the operator. Conversely, a second length 214 of the outer jacket 210 is farther from the torch handle 204, and covers a section of the conductor 208 that is more likely to be laid on the ground and subject to abrasion.

The example first length 212 of the outer jacket 210 is constructed from a material that has a lower density and/or a higher flexibility than a material used to construct the second length 214. By using a lower density and/or higher flexibility material on a portion of the outer jacket 210 that is less likely to experience abrasion, the outer jacket 210 may be provided with significant weight savings, reduced operator fatigue during operation, and/or reduced cost. Example materials that may be used for the first length 212 includes some synthetic polymers, including polyethylene polymer, chlorosulfonated polyethylene synthetic rubber, and/or any other suitable synthetic polymers, woven nylon, a para-aramid (e.g., Kevlar^{®} brand para-aramid fiber), and/or any other suitably light and flexible material, which may be further selected to satisfy the IEC 60974-7 (10) standard. The example first length 212 is between 0.5 meters and 2 meters in length and, in some examples, is between 1 and 1.5 meters in length, to provide a balance between weight and durability of the welding-type cable 202 as a whole.

A first end of the example second length 214 is located at an end of the first length 212 opposite the handle 204. The second length 214 may extend to an end of the welding-type cable 202, such as at or adjacent to a cable connector 216 used to connect the welding-type torch 200 to welding-type equipment (e.g., a wire feeder, a welding power supply, a plasma cutting power supply, etc.).

The example second length 214 may be constructed from a higher-durability material than the first length 212 to reduce damage to the welding-type cable 202 caused by abrasions and/or impacts. Example materials that may be used to implement the second length 214 of the outer jacket 210 include leather, a para-aramid (e.g., Kevlar^{®} brand para-aramid fiber), synthetic leathers, leather alternatives (e.g., plant-based materials designed to have similar durability and/or other qualities to leather), and/or rubbers having a Durometer of at least 50A, which may be further selected to satisfy the IEC 60974-7 (10) standard.

The first and second lengths 212, 214 are dimensioned such that most or all of the second length 214 of the welding-type cable is typically rested on a surface (e.g., the floor, a cable hanger, etc.) and not borne by the welding operator. As a result, the operator experiences the reduced weight and higher flexibility compared to conventional fully leather-covered welding cables. The welding-type cable 202 also experiences less damage due to abrasions and/or other forms of damage, and/or a longer operational life relative to conventional welding cables covered with synthetic outer jackets.

The example first and second lengths 212, 214 may be connected to reduce or prevent ingress of water, dust, and/or other contaminants into the interior of the welding-type cable 202. For example, the outer jacket 210 may be constructed with a coupling 218 between the first length and the second length 212. For materials that are compatible, the first length 212 and the second length 214 may be ultrasonically welded or otherwise joined to provide a seal. In other examples, the adjacent ends of the first length 212 and the second length 214 may be stitched or sewn together. Additionally or alternatively, the first length 212 and the second length 214 may be chemically bonded, such as using an adhesive, epoxy, glue, sealant, and/or any other effective bonding agents. In some other examples, the first and second lengths 212, 214 may be connected using fasteners such as hook-and-loop fasteners and/or zippers. In examples in which the materials covering the first length 212 and the second length 214 are incompatible with other methods, the first length 212 and the second length 214 may be clamped over the conductor 208 using one or more clamping devices (e.g., a hose clamp), and may further include a gasket to reduce or prevent contaminant ingress.

In some examples, the first length 212 and/or the second length 214 are removable and replaceable. For example, the first and/or second lengths 212, 214 may be fastened on the outside of the welding-type cable 202 with a fastener, such as a hook-and-loop fastener or a zipper, along the longitudinal length of the first length 212 and/or the second length 214. In other examples, the first length 212 and/or the second length 214 can be slid over the connector 216 to install or remove the first length 212 and/or the second length 214.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein, welding-type power refers to power suitable for welding, cladding, brazing, plasma cutting, induction heating, carbon arc cutting, and/or hot wire welding/preheating (including laser welding and laser cladding), carbon arc cutting or gouging, and/or resistive preheating.

As used herein, a welding-type power supply and/or power source refers to any device capable of, when power is applied thereto, supplying welding, cladding, brazing, plasma cutting, induction heating, laser (including laser welding, laser hybrid, and laser cladding), carbon arc cutting or gouging, and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

Certain embodiments of the invention are described in the following clauses:
Clause 1. A welding-type cable, comprising:
   a conductor configured to conduct welding-type current; and
   an outer jacket around the conductor;
   wherein a first length of the outer jacket is constructed from a first material, and a second length of the outer jacket is constructed from a second material different than the first material, the second length covering a different portion of the conductor than the first length.
Clause 2. The welding-type cable as defined in clause 1, further comprising a welding torch connector configured to couple the conductor to a welding torch, wherein the first length of the outer jacket covers a portion of the conductor adjacent the welding torch connector.
Clause 3. The welding-type cable as defined in clause 2, wherein the first length of the outer jacket has at least one of a lower density or a higher flexibility than the second length of the outer jacket.
Clause 4. The welding-type cable as defined in clause 2, wherein the first length of the outer jacket comprises a synthetic polymer.
Clause 5. The welding-type cable as defined in clause 4, wherein the synthetic polymer is a polyethylene polymer.
Clause 6. The welding-type cable as defined in clause 4, wherein the synthetic polymer is a chlorosulfonated polyethylene synthetic rubber.
Clause 7. The welding-type cable as defined in clause 2, wherein the first length of the outer jacket is between 0.5 meter and 2 meters.
Clause 8. The welding-type cable as defined in clause 7, wherein the first length of the outer jacket is between 1 meter and 1.5 meters.
Clause 9. The welding-type cable as defined in clause 1, further comprising a welding cable connector configured to couple the conductor to welding-type equipment, wherein the second length of the outer jacket covers a portion of the conductor adjacent the welding cable connector.
Clause 10. The welding-type cable as defined in clause 9, wherein the second length of the outer jacket comprises leather.
Clause 11. The welding-type cable as defined in clause 9, wherein the second length of the outer jacket comprises at least one of a para-aramid, a synthetic leather, a leather alternative, or a rubber having a durometer of at least 50A.
Clause 12. The welding-type cable as defined in clause 1, wherein the first length is coupled to the second length via at least one of stitching, sewing, clamping, chemical bonding, or ultrasonic welding.
Clause 13. A welding-type torch, comprising:
   a handle;
   a torch head coupled to the handle; and
   a torch cable configured to conduct welding-type current to the torch head, the torch cable comprising:
      a conductor configured to conduct welding-type current; and
      an outer jacket around the conductor;
      wherein a first length of the outer jacket is constructed from a first material, and a second length of the outer jacket is constructed from a second material different than the first material, the second length covering a different portion of the conductor than the first length.
Clause 14. The welding-type torch as defined in clause 13, wherein the torch head comprises at least one of a wire-fed contact tip assembly, a stick electrode holder, a tungsten electrode assembly, a plasma cutting head, or a gouging head.
Clause 15. The welding-type torch as defined in clause 13, wherein the first length of the outer jacket covers a portion of the conductor adjacent the handle.
Clause 16. The welding-type torch as defined in clause 15, wherein the first length of the outer jacket has at least one of a lower density or a higher flexibility than the second length of the outer jacket.
Clause 17. The welding-type torch as defined in clause 15, wherein the first length of the outer jacket comprises a synthetic polymer.
Clause 18. The welding-type torch as defined in clause 15, wherein the first length of the outer jacket is between 0.5 meter and 2 meters.
Clause 19. The welding-type torch as defined in clause 13, further comprising a welding cable connector configured to couple the conductor to welding-type equipment, wherein the second length of the outer jacket covers a portion of the conductor adjacent the welding cable connector.
Clause 20. The welding-type torch as defined in clause 19, wherein the second length of the outer jacket comprises leather.
Clause 21. The welding-type torch as defined in clause 19, wherein the second length of the outer jacket comprises at least one of a para-aramid, a synthetic leather, a leather alternative, or a rubber having a durometer of at least 50A.
Clause 22. The welding-type torch as defined in clause 13, wherein the first length is coupled to the second length via at least one of stitching, clamping, chemical bonding, or ultrasonic welding.

## Claims

1. A welding-type cable, comprising:
a conductor configured to conduct welding-type current; and
an outer jacket around the conductor;
wherein a first length of the outer jacket is constructed from a first material, and a second length of the outer jacket is constructed from a second material different than the first material, the second length covering a different portion of the conductor than the first length.

2. The welding-type cable as defined in claim 1, further comprising a welding torch connector configured to couple the conductor to a welding torch, wherein the first length of the outer jacket covers a portion of the conductor adjacent the welding torch connector.

3. The welding-type cable as defined in claim 2, wherein the first length of the outer jacket has at least one of a lower density or a higher flexibility than the second length of the outer jacket.

4. The welding-type cable as defined in claim 2, wherein the first length of the outer jacket comprises a synthetic polymer, for example
wherein the synthetic polymer is a polyethylene polymer, or
wherein the synthetic polymer is a chlorosulfonated polyethylene synthetic rubber.

5. The welding-type cable as defined in claim 2, wherein the first length of the outer jacket is between 0.5 meter and 2 meters, and optionally
wherein the first length of the outer jacket is between 1 meter and 1.5 meters.

6. The welding-type cable as defined in claim 1, further comprising a welding cable connector configured to couple the conductor to welding-type equipment, wherein the second length of the outer jacket covers a portion of the conductor adjacent the welding cable connector.

7. The welding-type cable as defined in claim 6, wherein the second length of the outer jacket comprises leather, or
wherein the second length of the outer jacket comprises at least one of a para-aramid, a synthetic leather, a leather alternative, or a rubber having a durometer of at least 50A.

8. The welding-type cable as defined in claim 1, wherein the first length is coupled to the second length via at least one of stitching, sewing, clamping, chemical bonding, or ultrasonic welding.

9. A welding-type torch, comprising:
a handle;
a torch head coupled to the handle; and
a torch cable configured to conduct welding-type current to the torch head, the torch cable comprising:
a conductor configured to conduct welding-type current; and
an outer jacket around the conductor;
wherein a first length of the outer jacket is constructed from a first material, and a second length of the outer jacket is constructed from a second material different than the first material, the second length covering a different portion of the conductor than the first length.

10. The welding-type torch as defined in claim 9, wherein the torch head comprises at least one of a wire-fed contact tip assembly, a stick electrode holder, a tungsten electrode assembly, a plasma cutting head, or a gouging head.

11. The welding-type torch as defined in claim 9, wherein the first length of the outer jacket covers a portion of the conductor adjacent the handle.

12. The welding-type torch as defined in claim 11, wherein the first length of the outer jacket has at least one of a lower density or a higher flexibility than the second length of the outer jacket, or
wherein the first length of the outer jacket comprises a synthetic polymer, or
wherein the first length of the outer jacket is between 0.5 meter and 2 meters.

13. The welding-type torch as defined in claim 9, further comprising a welding cable connector configured to couple the conductor to welding-type equipment, wherein the second length of the outer jacket covers a portion of the conductor adjacent the welding cable connector.

14. The welding-type torch as defined in claim 13, wherein the second length of the outer jacket comprises leather, or
wherein the second length of the outer jacket comprises at least one of a para-aramid, a synthetic leather, a leather alternative, or a rubber having a durometer of at least 50A.

15. The welding-type torch as defined in claim 9, wherein the first length is coupled to the second length via at least one of stitching, clamping, chemical bonding, or ultrasonic welding.
